# EUROPEAN PATENT SPECIFICATION

(11) **EP 2 052 996 B1**
(45) Date of publication and mention of the grant of the patent: **10.02.2010**
(21) Application number: 07425673.6
(22) Date of filing: 25.10.2007
(51) Int. Cl.: B65G 33/30

(54) **Feed system for a conveyor screw**
Zufuhrsystem für eine Förderschnecke
Système d'alimentation pour vis de convoyeur

(43) Date of publication of application: 29.04.2009
(73) Proprietor: Moltrasio, Elisabetta, 20151 Milano (IT)
(72) Inventor: Moltrasio, Elisabetta, 20151 Milano (IT)
(74) Representative: Gatti, Enrico

(56) References cited:
- DE-A1- 19 602 379
- JP-A- 3 232 610
- US-A- 4 036 411
- US-A- 4 328 913

## Description

The present invention relates to a feed system and feed method for a conveyor screw, in particular a conveyor screw extraction and transport system, suitable particularly for loose fragile materials and materials of high density and hardness, according to the preamble of claims 1 and 6 respectively.

The most well known systems for conveying and dispensing loose fragile or high hardness materials of average particle size distribution are vibrating channels and conveyor belts.

A vibrating channel consists of a channel of rectangular or trapezoidal cross-section with its minor base at the bottom. The channel is open upperly to receive the product to be dispensed and open at one end to discharge the product onto a weighing balance or towards a transport or holding system.

The channel is mounted elastically on a vibrating device which causes the channel to oscillate longitudinally and vertically.

By suitably combining the frequency, amplitude and resultant direction of the oscillation, the product is made to translate along the channel, even along an upward slope. Notwithstanding the interesting properties of this system, large throughputs are obtained only with a considerable channel and vibration generator size. If product weighing is required, this has necessarily to use net weight balances.

In contrast to vibrating channels, the most well known conveyor belts are also able to act as a weighing balance and can accommodate a high throughput.

However, when these are used in packaging systems, conveying and dispensing systems both require other devices to pour the product into containers constructed of rigid or flexible material, and still further devices to close the containers after filling.

In contrast, a screw conveyor system is mainly used to convey loose materials, mainly in powder form.

It is used in bagging machines where the product is weighed while being conveyed directly into the container, which in this case is a valve-type bag.

In using bags of this type, the valve closes automatically during discharge by the effect of the pressure exerted by the contained product. No other operation is required. Because of its simplicity of use, the valve-type bag is widely used to package plastic granules, cement, animal feeds, flour, seeds and other granular or powder products.

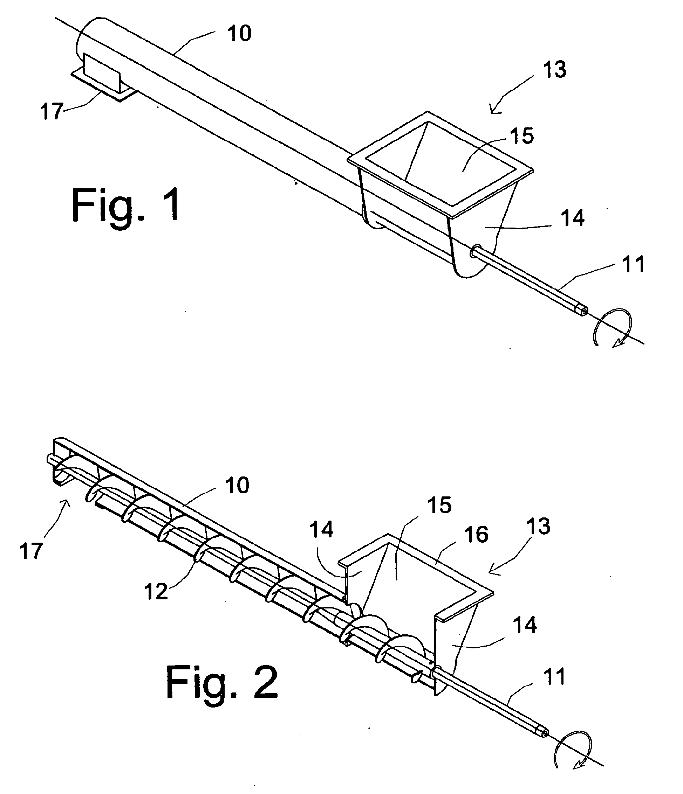

A continuous spiral screw conveyor, shown in Figures 1 and 2, consists of a fixed conveying channel (also called a trough) of circular cross-section, within which a shaft 11 rotates, about which a screw 12 (also called a spiral or helix) extends to convey the material.

An inlet port 13 (also called an extractor) is used to feed the product to be transported into the conveyor screw. It is in the form of a upperly open container (stub pipe) of sheet metal or other material, commonly with a rectangular or circular cross-section. In the most common case of a rectangular cross-section port, it consists of two orthogonal walls 14 and two longitudinal walls 15 parallel to the screw axis. A flange 16 or other element is fixed on the four walls to enable it to be connected to storage silos or to transport devices.

The longitudinal walls of the port 13 are external to the screw and are usually connected to a semi-cylindrical base with its tangential direction forming part of the channel 10. In certain cases, one or both walls of the stub pipe are inclined outwards to facilitate access of the loose material to the spaces between the spiral turns of the screw 12.

An outlet port 17 is positioned at the end of the screw for material exit.

If powder material is introduced into the inlet port 13 everything functions correctly. However, if granular material is introduced, this follows various paths.

Some material enters between the turns of the screw 12 and, on reaching the semi-cylindrical base of the trough 10, it is thrust forwards by the rotation of the spiral turns without undergoing damage.

Other material falls to immediately become wedged between the exterior of the screw 12 and a longitudinal wall 15 of the channel 10, to undergo a shearing effect.

Other material enters between the spiral turns of the screw 12, but becomes wedged during rotation as previously described. This second effect is inevitable, because when the spaces between the turns are already saturated with material, many grains lie at the top, close to the screw periphery where the straight walls join the cylindrical base.

The latter two described events are caused by the tangential force generated by the friction coefficient between the edge of the helix and the grain, this increasing as the pressure exerted on the grain increases. The tangential force entrains the grain towards the corner until one of the following events occurs. If the grains are of fragile material, the grains break. If the grains are of high hardness material, either the screw rotation halts, or the screw undergoes momentary stoppage with elastic or plastic deformation of the spiral turn.

Moreover, transport takes place within the open part of the channel 10 in the inlet 13 region, then within the closed channel 10. During its transit within the region bounding the open and closed channels, it happens that those grains lying between the turns close to the shaft 11 are thrust forwards without damage, whereas those grains lying in proximity to the outer edges in the top part of the screw 12 are thrust forwards, but when the channel changes from open to closed, they become wedged between the turns of the screw 12 and the upper edge of the circular channel (an orthogonal wall). Hence in this region they undergo a shear effect.

An object of the invention is to provide a conveyor screw feed system which overcomes the drawbacks of the known art.

Another object is to provide a system which is of simple construction and low cost.

The patent US 4,328,913 discloses an apparatus for conveying cellulosic animal bedding with a screw conveyor. It also discloses a conveyor screw feed system and method according to the preamble of claims 1 and 6. The screw of the auger has flights of predetermined different heights which avoid undue compaction of the bedding as it is conveyed.

These and other objects are attained according to claim 1.

These objects are also attained by a conveyor screw feed method, according to claim 6.

Further characteristics of the invention are described in the dependent claims.

By virtue of the present invention, granular materials of different sizes can be conveyed without the product being damaged or crushed by the screw spiral. The system also enables gravel to be extracted and conveyed without the stones causing stoppage to the rotation of the screw or damage other than wear. This hence enables products such as wood pellets, animal feed pellets, gravel, asphalt or other granular products to be conveyed, dispensed and packaged into valve-type bags.

The characteristics and advantages of the present invention will be apparent from the ensuing detailed description of one embodiment thereof, illustrated by way of non-limiting example in the accompanying drawings, in which:
Figure 1 shows schematically a screw of the known art;
Figure 2 shows a schematic longitudinal section through a screw of the known art;

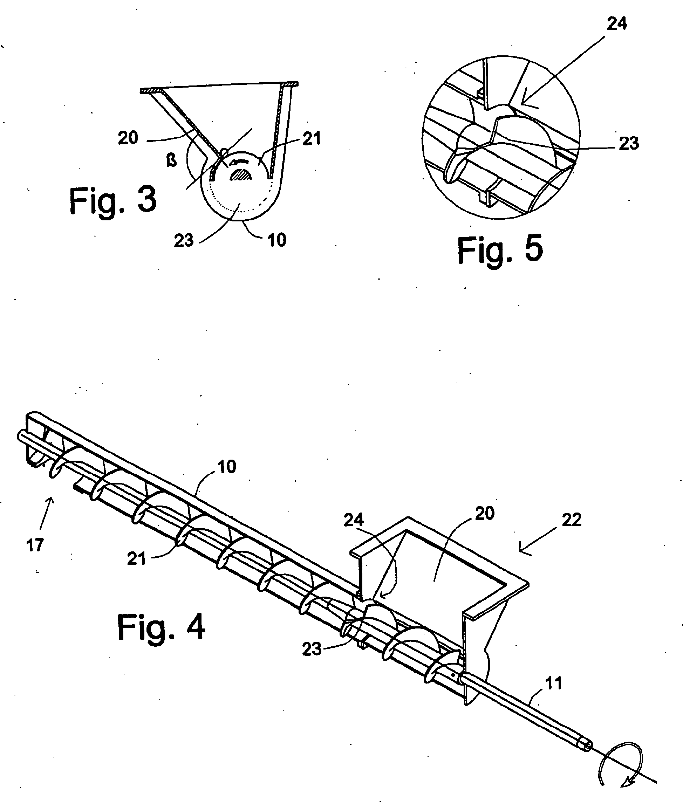

Figure 3 shows a schematic cross-section through the inlet port of a screw, according to the present invention;
Figure 4 shows a schematic longitudinal section through a screw, according to the present invention;
Figure 5 shows schematically a portion of the screw of Figure 4, according to the present invention.

With reference to the accompanying figures, a conveyor screw feed system according to the present invention has at least one, 20, of its lateral walls inclined parallel to the shaft 11 and connected directly to the cylindrical base of the channel 10 without other wall portions being interposed. It is positioned in a plane which in its ideal prolongation passes through the channel 10, within the space occupied by the screw 21. The preferred position of the plane is that in which it also passes through the shaft 11, such that the angle β formed between the secant plane and the tangent to the cylindrical surface defining the screw is greater than about 45° and between about 45° and about 135°, and preferably about 90°.

The screw 21 is interrupted in the region 23, through its entire height, as far as the shaft 11, along a suitable length measured in the screw longitudinal direction (axis).

The interruption commences within the port 22 where the product is inserted, and terminates at the beginning of the cylindrical channel 10 or even in its interior.

The length of the interruption 23 measured along the screw axis is equal to or greater than the maximum dimension of the largest piece transported.

Choosing as observation point the direction of the axis of rotation and that end of the shaft 11 towards which the product is urged, if the screw 21 rotates clockwise the inclined lateral part 20 lies to the right of the axis of rotation.

The interruption 23 can have a height from the shaft 11 which is equal to or greater than the maximum dimension of the largest piece conveyed by the screw.

The port 22 can also be of circular shape with a lateral wall 20 inclined.

By virtue of the proposed solution, the product grains introduced cannot become wedged within the region 24 between the port 22 and the spiral turns of the screw 21 because at the point of incidence of the chute the angle β formed between the wall 20 and the tangent to the ideal cylinder which circumscribes the screw does not generate any wedging effect and hence any shear force. A single grain is limited to rotating about itself until, most probably, it falls between the spiral turns.

After entering between the screw spiral turns, the product is conveyed towards the channel 10.

By virtue of the partial interruption 23 in the spiral of the screw 21, the solution enables the grains within the transition region to be not subjected to any shear force within the region 24.

In this region 24, advancement is ensured by the friction forces within the product. In this respect, said forces bind the product in contact with the spiral turns with that lying in the transition region, so enabling translational movement to be transmitted.

Having entered the closed tube, the product is conveyed by the helix turns as far as the outlet port 17.

Tests have shown that the system functions with loose products the grains of which are of regular or irregular shape, and with products consisting of mixtures of materials formed of grains of different dimensions, consistency and hardness.

The present invention is advantageous for various applications.

For example it can be used as a bagging screw conveyor for valve-type bags to simplify and reduce the cost of a packaging installation for granular or other products, whether fragile or not. In this respect, up to the present time such products have been packaged in open-mouth bags which then have to be closed by needle sewing or sealed by thermal welders or other systems. The greatest complication in packaging installations for open-mouth bags derives from the greater number of operations and devices required to achieve the finished package. To this must be added the complication of the systems for adapting to the different bag formats, which in contrast in the case of a valve-type bag are simple and reliable.

Moreover, except in special cases, the volume of an open-mouth bag is never utilized totally because of the arrangement of the bag while the product is being poured (suspended and stretched by the weight of the product already deposited on its base) and of the particular cylindrical or oval shape of the loading outlet, which in most cases is much smaller than mouth of the bag. Another negative aspect is the greater difficulty of using automatic palletizers for despatching this type of bag.

In practice, the materials used and the dimensions can be chosen at will according to requirements and to the state of the art.

The system conceived in this manner is susceptible to numerous modifications and variants, all falling within the scope of the appended claims.

## Claims

1. A conveyor screw feed system, for granular materials, comprising: a transport channel (10) of circular cross-section; a screw (21) rotating within said channel about an axis of rotation; a feed port (22) for said screw (21) comprising lateral walls, at least one wall (20) parallel to the screw axis, which lies in a plane passing through said transport channel within the space occupied by the screw and forming an angle (β) to the tangent at the cylindrical surface of said circular cross-section transport channel containing said screw of between about 45° and about 135°, **characterised in that**, said screw (21) comprises an interruption (23) in the area of said feed port (22) through its entire height reaching a shaft (11) of said screw (21); the length of said interruption (23), measured along the screw axis being equal to or greater than the maximum dimension of the largest piece conveyed by said screw.

2. A system as claimed in claim 1, **characterised in that** said interruption commences in the area of said feed port (22) and terminates in proximity to or beyond an orthogonal wall (20) positioned downstream of said feed port (22).

3. A system as claimed in claim 1, **characterised in that** said screw (21) rotates within said transport channel (10) in a clockwise direction, said at least one wall (20) parallel to the screw axis being positioned to the right of said transport channel (10).

4. A system as claimed in claim 1, **characterised in that** said screw (21) rotates within said transport channel (10) in an anticlockwise direction, said at least one wall (20) parallel to the screw axis being positioned to the left of said transport channel (10).

5. A system as claimed in claim 1, **characterised in that** said angle to the tangent at the cylindrical surface of said transport channel (10) of circular cross-section containing said screw is equal to about 90°.

6. A conveyor screw feed method, comprising the steps of:
providing for said screw (21) a feed port (22) comprising lateral walls, disposing at least one wall (20) parallel to the axis of said screw (21) in a plane passing through the area occupied by said screw (21) and forming an angle to the vertical through said screw (21) greater than about 45°;
**characterised by** comprising the step of
disposing an interruption in said screw (21) within the area of said feed port, through its entire height reaching a shaft (11) of said screw (21).

## Patentansprüche

1. Zufuhrsystem für eine Förderschnecke mit: Einem Transportkanal (10) mit kreisförmigem Querschnitt, einer sich innerhalb des Kanals um eine Drehachse drehenden Schnecke (21), einem Zuführanschluss (22) für die Schnecke mit Seitenwänden, wobei wenigstens eine Wand (20) parallel zur Schneckenachse liegt und in einer Ebene liegt, die den Transportkanal innerhalb des von der Schnecke eingenommenen Raumes schneidet und die einen Winkel (β) zu der Tangente an der zylindrischen Oberfläche des im Querschnitt kreisförmigen Transportkanals, der die Schnecke enthält, zwischen etwa 45° und etwa 135° einnimmt, **dadurch gekennzeichnet, dass** die Schnecke (21) im Bereich des Zuführanschlusses (22) eine Unterbrechung (23) über ihre gesamte Höhe bis hin zu einer Welle (11) der Schnecke (21) aufweist, wobei die Länge der Unterbrechung (23) gemessen entlang der Schneckenachse gleich oder größer als die maximale Abmessung des größten von der Schnecke zu fördernden Stücks ist.

2. System nach Anspruch 1, **dadurch gekennzeichnet, dass** die Unterbrechung im Bereich des Zuführanschlusses (22) anfängt und in der Nähe oder jenseits einer orthogonalen Wand endet, die stromabwärts des Zuführanschlusses (22) angeordnet ist.

3. System nach Anspruch 1, **dadurch gekennzeichnet, dass** sich die Schnecke (21) innerhalb des Transportkanals (10) im Uhrzeigersinn dreht, wobei die wenigstens eine parallel zu der Schneckenachse liegende Wand (20) auf der rechten Seite des Transportkanals (10) liegt.

4. System nach Anspruch 1, **dadurch gekennzeichnet, dass** die Schnecke (21) sich innerhalb des Transportkanals (10) entgegen dem Uhrzeigersinn dreht, wobei die wenigstens eine parallel zu der Schneckenachse liegende Wand (20) auf der linken Seite des Transportkanals (10) liegt.

5. System nach Anspruch 1, **dadurch gekennzeichnet, dass** der Winkel zur Tangente an der zylindrischen Oberfläche des Transportkanals (10), der einen kreisförmigen Querschnitt hat und die Schnecke enthält, etwa gleich 90° ist.

6. Zuführverfahren für einen Schneckenförderer mit den Schritten:
Bereitstellen eines Zuführanschlusses (22) für die Schnekke (21) mit Seitenwänden, Anordnen wenigstens einer Wand (20) parallel zu der Schneckenachse (21) in einer Ebene, die das von der Schnecke (21) eingenommene Gebiet schneidet und einen Winkel zu der Vertikalen durch die Schnecke (21) größer als 45° bildet, **dadurch gekennzeichnet, dass** es den Schritt aufweist, eine Unterbrechung in der Schnekke (21) im Bereich des Zuführanschlusses anzuordnen, die über die ganze Höhe bis zu einer Welle (11) der Schnecke (21) reicht.

## Revendications

1. Système d'alimentation de vis de convoyeur pour matériaux granulaires, comprenant : un canal de transport (10) de section circulaire; une vis (21) tournant à l'intérieur dudit canal autour d'un axe de rotation; une entrée d'alimentation (22) pour ladite vis (21) comprenant des parois latérales, au moins une paroi (20) parallèle à l'axe de la vis, qui s'étend dans un plan passant au travers dudit canal de transport à l'intérieur de l'espace occupé par la vis et formant un angle (β) avec la tangente à la surface cylindrique dudit canal de transport de section circulaire contenant ladite vis dont la valeur est comprise entre environ 45° et environ 135° ; **caractérisé en ce que** ladite vis (21) comprend une interruption (23) dans la zone de ladite entrée d'alimentation (22) au travers de sa hauteur totale atteignant un arbre (11) de ladite vis (21); la longueur de ladite interruption (23), mesurée le long de l'axe de la vis étant égale ou supérieure à la dimension maximale de la pièce la plus grande convoyée par ladite vis.

2. Système selon la revendication 1, **caractérisé en ce que** ladite interruption commence dans la zone de ladite entrée d'alimentation (22) et se termine à proximité ou au delà d'une paroi orthogonale (20) positionnée en aval de ladite entrée d'alimentation (22).

3. Système selon la revendication 1, **caractérisé en ce que** ladite vis (21) tourne à l'intérieur dudit canal de transport (10) dans le sens des aiguilles d'une montre, ladite au moins une paroi (20) parallèle à l'axe de la vis étant positionnée sur la droite dudit canal de transport (10).

4. Système selon la revendication 1, **caractérisé en ce que** ladite vis (21) tourne à l'intérieur dudit canal de transport (10) dans le sens inverse des aiguilles d'une montre, ladite au moins une paroi (20) parallèle à l'axe de la vis étant positionnée sur la gauche dudit canal de transport (10).

5. Système selon la revendication 1, **caractérisé en ce que** ledit angle avec la tangente à la surface cylindrique dudit canal de transport (10) de section circulaire contenant ladite vis est égal à environ 90°.

6. Procédé d'alimentation de vis de convoyeur, comprenant les étapes consistant à :
munir ladite vis (21) d'une entrée d'alimentation (22) comprenant des parois latérales, disposer au moins une paroi(20) parallèle à l'axe de ladite vis (21) dans un plan passant au travers de la zone occupée par ladite vis (21) et formant un angle avec la verticale passant au travers de la vis (21) supérieur à environ 45° ;
**caractérisé en ce qu'**il comprend l'étape consistant à disposer une interruption dans ladite vis (21) à l'intérieur de la zone de ladite entrée d'alimentation, au travers de sa hauteur totale atteignant un arbre (11) de ladite vis (21).
